# FASCICULE DE BREVET EUROPEEN

(11) **EP 4 348 079 B1**
(45) Date de publication et mention de la délivrance du brevet: **27.08.2025**
(21) Numéro de dépôt: 21732819.4
(22) Date de dépôt: 02.06.2021
(51) Int. Cl.: F16H 1/30, F02C 7/36

(54) **RÉDUCTEUR RADIAL HAUTE DENSITÉ DE PUISSANCE POUR TURBOSOUFFLANTE**
RADIALREDUZIERER MIT HOHER LEISTUNGSDICHTE FÜR TURBOFAN
HIGH POWER DENSITY RADIAL REDUCER FOR TURBOFAN

(43) Date de publication de la demande: 10.04.2024
(73) Titulaire: Grolleau, Franck, 28110 Luce (FR)
(72) Inventeur: Grolleau, Franck, 28110 Luce (FR)
(86) Numéro de dépôt international: PCT/EP2021/064883
(87) Numéro de publication internationale: WO 2021/245180

(56) Documents cités:
- WO-A1-2009/104473
- FR-A- 1 361 588
- FR-A1- 2 573 816
- KR-B1- 101 677 939

## Description

La présente invention concerne le domaine des réducteurs de vitesse pour moteur à turbine à gaz d'aéronef, en particulier pour turbosoufflante à fort taux de dilution. Bien que la présente invention ai été développée pour être utilisée dans une turbosoufflante d'aéronef, certaines applications peuvent être en dehors de ce domaine.

Une turbosoufflante à double flux ou « turbofan » (en langue anglaise), peut être définie globalement comme une turbomachine à gaz entrainant, au moins, une soufflante carénée, d'un module de soufflante.

Les nouvelles générations de turbosoufflantes à fort taux de dilution, comportent un réducteur de vitesse mécanique raccordé coaxialement entre l'arbre de sortie de la turbomachine et l'arbre de soufflante. De manière usuelle, le réducteur de vitesse, ou réducteur, a pour but de transformer la vitesse de rotation dite rapide de l'arbre de la turbomachine en une vitesse de rotation plus lente pour l'arbre entrainant la soufflante, permettant ainsi d'optimiser la vitesse de rotation de la turbomachine en conservant une vitesse de rotation de soufflante adaptée. Cela permet entre autre, d'augmenter l'efficacité propulsive et de diminuer le niveau de bruit du moteur.

Pour une telle turbosoufflante, Il est connu que plus le réducteur permet une grande densité de puissance (puissance transmissible par le réducteur divisée par son poids), ainsi qu'un rapport de réduction élevé, et plus il est efficace.

Cependant, un moteur d'aéronef est un environnement où les conditions de fonctionnement et les exigences de fiabilité sont extrêmement sévères, et dans une telle turbosoufflante comportant un réducteur, les dentures d'engrenages très fortement sollicitées, sont parmi les parties mécaniques les plus sensibles du moteur.

De tel réducteurs à arbres coaxiaux pour turbosoufflante existent déjà dans l'état de l'art. Ils sont pour la grande majorité, de types connu à train épicycloïdal ou planétaire avec un porte-satellites fixe ou mobile, comme par exemple, les brevets US2015/0267618 A1 et US2016/0097330 A1

Toutefois, dans le cadre d'une utilisation dans un moteur d'aéronef, ces types de réducteurs ont l'inconvénient que les axes de rotation des engrenages qui les composent sont sensiblement parallèle à l'axe de rotation longitudinal du moteur. Cette orientation « axiale » des satellites, expose particulièrement les dents d'engrenages à des surcontraintes provoquées par les désalignements de la ligne d'arbres. Ces désalignements se produisent notamment pendant les manœuvres de l'aéronef et peuvent conduire à une fatigue prématurée. Aussi, malgré un montage souple du réducteur dit « flottant », encombrant et nécessitant une rigidité complexe à maitriser, la fiabilité de celui-ci n'est pas optimale et l'opérabilité du moteur peut en être affectée. Un autre inconvénient des types de réducteurs précités, est que leurs architectures ne sont pas optimales pour permettre à la fois, l'optimisation de la vitesse de rotation de la turbomachine et entrainer simultanément deux soufflantes en contra rotation.

Une telle configuration, comme celle divulguée par exemple dans le brevet EP 1 921 253 A2, oblige en général un montage avec un porte-à-faux prononcé des arbres des soufflantes contrarotatives, nécessitant l'utilisation de roulements supplémentaires pour guider et maintenir les arbres entre eux.

Cette architecture complexifie davantage la mise en œuvre du réducteur et augmente les probabilités de défaillances, ce qui n'est pas optimal.

Il est en effet connu qu'un doublet de soufflantes contrarotatives, tournant sensiblement à une même vitesse de rotation, permet un gain important d'efficacité propulsive. Aussi, du fait de la forte tendance actuelle de recherche d'un moteur d'aéronef à haute efficience, il est avantageux qu'un réducteur pour turbosoufflante permettant d'optimiser la vitesse de la turbomachine, permettre aussi, en variante de réalisation, d'entrainer de telles soufflantes contrarotatives le plus simplement et avec le plus de fiabilité possible.

On connait par le document EP 0 814 281 B1, le réducteur à arbres coaxiaux comportant des engrenages à axes concourants perpendiculaires, c'est-à-dire composé d'une paire de roues dentées coaxiales reliées par une pluralité d'ensemble de pignons denté d'ont les axes de rotation sont sensiblement perpendiculaire à l'axe de rotation longitudinal du moteur.

Cette orientation « radiale » des ensembles de pignons denté par rapport à l'axe de rotation longitudinal du moteur, permet aux dents d'engrenages d'être beaucoup moins sensibles aux désalignements de la ligne d'arbres précités, et permet donc une fiabilité améliorée.

Cependant, dans un tel type précité de réducteur comportant des engrenages à axes concourants perpendiculaires, une forte densité de puissance est obtenue par une forte division du couple, aussi appelée « split torque » (en langue anglaise). Autrement dit, la densité de puissance du réducteur est proportionnelle à la pluralité d'ensemble de pignons denté répartis sur la paire de roues dentées.

En effet, la division du couple total transmis par le réducteur par une quantité suffisamment élevée d'ensembles de pignons denté, permet que chaque ensemble de pignons denté soit moins sollicité. Ce qui permet de réduire la taille des engrenages, donc l'encombrement et le poids du réducteur et par conséquent, augmente sa densité de puissance.

Toutefois, le réducteur à axes concourants du document précité présente les inconvénients suivants : d'une part, l'augmentation de la pluralité d'ensemble de pignons denté ne permet pas d'obtenir un rapport de réduction du réducteur au plus grand, ce qui n'est pas optimal pour l'application visée, et d'autre part, il ne permet pas d'entrainer deux soufflantes en contra rotation.

D'autres types de réducteur à arbres coaxiaux comportant des engrenages à axes perpendiculaires, concourants ou non, existent dans l'art antérieur tel que, par exemple, le document FR 1 361 588 A, mais aucun ne permet d'obtenir à la fois, une densité de puissance et un rapport de réduction au plus élevé.

### Exposé de l'invention

Les performances énergétiques et la fiabilité des moteurs d'avions commerciaux ayant un besoin constant d'améliorations, l'objectif de l'invention est de proposer un réducteur optimisé permettant de remédier aux inconvénients précités.

Pour ce faire, l'invention concerne selon son acceptation la plus générale, un réducteur de vitesse à arbres coaxiaux à engrenages à axes concourants pour moteur à turbine à gaz d'aéronef, en particulier pour turbosoufflante à fort taux de dilution, d'axe de rotation longitudinal X, comportant: un boitier carter ; un moyeu central ; une roue solaire, coaxiale et solidaire d'un arbre d'entrée configuré pour être relié à un arbre BP d'une turbomachine, montée rotative sur le moyeu central ;
une couronne, radialement plus grande que ladite roue solaire et espacée de celle-ci, coaxiale et solidaire d'un arbre de soufflante configuré pour être relié à une soufflante montée rotative sur un support palier de soufflante ; et
une pluralité de satellites d'axes de rotation Y transversal à l'axe X, répartis autour de l'axe X en étant espacés entre eux d'un angle A inférieur à 90° (degré) et comportant chacun, au moins, un satellite interne en prise maillée et coopérant avec ladite roue solaire, un satellite externe en prise maillée et coopérant avec ladite couronne, et un raccord de couplage couplant en rotation ledit satellite interne et ledit satellite externe ; chacun desdits satellites pivotant coaxialement autour d'un tourillon rattaché à ses extrémités au moyeu central et au boitier carter ;
caractérisé en ce que lesdits satellites internes de ladite pluralité de satellites, sont en prise maillée avec ladite roue solaire, en étant agencés de manière à se superposer radialement, successivement et alternativement dessus-dessous, en s'engrenant sur un premier diamètre moyen d'engrènement D1 puis sur un second diamètre moyen d'engrènement D2 plus grand de ladite roue solaire, afin que lesdits satellites internes coopèrent avec ladite roue solaire en se chevauchant diamétralement.

Avec ce type de réducteur de la présente invention, afin d'obtenir une valeur maximisée du rapport de réduction du réducteur, qui est égal au rapport de la vitesse de rotation de ladite roue solaire divisé par la vitesse de rotation de ladite couronne, le rapport du diamètre moyen d'engrènement de la roue solaire divisé par le diamètre moyen d'engrènement coopérant du satellite interne, doit être au minimum. Autrement dit, plus le diamètre moyen d'engrènement dudit satellite interne est grand par rapport à un diamètre moyen d'engrènement coopérant donné de ladite roue solaire, et plus le rapport de réduction du réducteur est grand.

Toutefois, dans l'art antérieur, une diminution de l'angle A, dans le but d'augmenter la densité de satellites sur la paire de roues dentées, réduit le diamètre moyen d'engrènement des pignons dentés internes, ce qui diminue d'autant le rapport de réduction du réducteur, et ne peux donc pas être optimal.

Avantageusement le réducteur de la présente invention comporte une roue solaire possédant une largeur de denture permettant que deux satellites internes espacés d'un angle A inférieur à 90°, s'engrènent sur celle-ci sur deux diamètres moyens d'engrènement distinct, en se superposant radialement dessus-dessous.

Une telle roue solaire permet à une pluralité desdits satellites internes de s'engrener sur celle-ci, les uns après les autres dessus-dessous de manière alternée, sans que leur diamètre extérieur ne soit limité par l'encombrement desdits satellites internes adjacents, leur permettant ainsi de se chevaucher afin de maximiser leur diamètre moyen d'engrènement. De ce fait, le rapport du diamètre moyen d'engrènement de la roue solaire divisé par le diamètre moyen d'engrènement coopérant de chacun desdits satellites internes est inférieur à la valeur 2 / A ( 2 divisé par A, avec l'angle A exprimé en radians).

En outre, lesdits satellites internes de la pluralité de satellites, ont un diamètre moyen d'engrènement plus petit ou plus grand, selon qu'ils coopèrent respectivement avec ledit premier diamètre moyen d'engrènement D1 ou avec ledit second diamètre moyen d'engrènement D2 de la roue solaire, de manière à ce que le rapport obtenu entre la roue solaire et chacun desdits satellites internes est identique.

Enfin, lesdits satellites internes et externes de la pluralité de satellites étant couplés en rotation par l'intermédiaire d'un raccord de couplage, ladite pluralité de satellites tournent sur eux-mêmes tous simultanément et à une même vitesse de rotation, lorsqu'ils sont entrainés par l'une ou par l'autre de ladite roue solaire ou de ladite couronne.

Un réducteur à engrenages à axes concourants de la présente invention, ayant une pluralité desdits satellites espacés d'un angle A inférieur à 90°, permet que, pour un diamètre moyen d'engrènement donné de la roue solaire, le diamètre moyen d'engrènement desdits satellites internes est maximisé, par conséquent, le rapport de réduction du réducteur est au plus grand, et est optimal pour l'application visée.

Ainsi, dans un mode de réalisation préféré de l'invention, un réducteur de la présente invention composé, par exemple, d'une pluralité de 10 (dix) desdits satellites repartis avec un angle A égal à 36° autour de l'axe X sur un plan sensiblement perpendiculaire à celui-ci, le rapport entre la roue solaire et chacun desdits satellites internes est inférieur ou égal à 2,4 et le rapport de réduction du réducteur est supérieur ou égal à 3:1

Autrement dit, l'arbre de soufflante et la couronne ont pivotés d'un tour, tandis que dans le même temps, l'arbre BP et la roue solaire ont pivotés de 3 tours, tous pivotant autour de l'axe X.

Le réducteur selon l'invention peut comprendre une ou plusieurs des caractéristiques suivantes, prises isolément les unes des autres ou en combinaison les unes avec les autres :

- de préférence, lesdits satellites internes et externes et lesdites couronne et roue solaire sont des engrenages de type à axes concourants à denture conique, à dents droites ou inclinées
- en variante de réalisation, lesdits satellites internes et externes et lesdites couronne et roue solaire sont des engrenages de type à axes concourants à denture frontale, à dents droites ou inclinées
- plus particulièrement, ladite roue solaire et ladite couronne ont des dents inclinées dans un même sens, afin que sous la charge nominale, lesdits satellites externes et lesdits satellites internes, étant en contact, se poussent mutuellement l'un sur l'autre, axialement dans la direction de leur axe de rotation Y
- de préférence, lesdits satellites externes et lesdits satellites internes de la pluralité de satellites, pivotent sur leur tourillon respectif, par l'intermédiaire de palier fluide ou de roulement à rouleaux.
- le raccord de couplage de forme annulaire, comporte une extrémité intérieure et une extrémité extérieure sensiblement coaxiales, et peut se déformer élastiquement de manière qu'un déplacement angulaire se produit entre ladite extrémité intérieure et ladite extrémité extérieure, lorsque qu'un moment ou un couple est appliqué entre lesdites extrémités.
- dans un autre mode de réalisation, au moins un pignon denté, d'axe de rotation Y' transversal à l'axe X, est en prise maillée et coopère avec la roue solaire simultanément avec lesdits satellites internes et comporte, au moins, une partie cylindrique traversant radialement le boitier carter afin de créer une prise-de-force extérieure radiale permettant d'utiliser le dispositif à la fois comme réducteur et comme renvoi d'angle.

En amont du réducteur, d'un même côté que la soufflante, ledit boitier carter est rattaché au support paliers de soufflante, par une pluralité de vis ou tout autres moyens de fixation équivalent, sur un diamètre K compris entre le diamètre extérieur du roulement de soufflante et le diamètre extérieur du boitier carter, permettant ainsi, d'une part de relier le réducteur au bâti fixe de la turbosoufflante, et d'autre part, de faire varier, par l'intermédiaire du diamètre K, la capacité du réducteur à plus ou moins suivre les déflections structurelles du support paliers de soufflante.

En variante d'un mode de réalisation, une soufflante contrarotative est ajoutée aux modes de réalisation précédant. Pour ce faire une couronne contrarotative, de dimension et de denture d'engrenage identique à ladite couronne, coaxiale et solidaire d'un arbre de soufflante contrarotative configuré pour être relié à une soufflante contrarotative S' d'axe de rotation X montée rotative sur un support paliers de soufflante contrarotative, est en prise maillée et coopère avec la pluralité desdits satellites externes, d'un côté opposé à ladite couronne par rapport à ladite pluralité de satellites.

Plus particulièrement, ladite couronne contrarotative tourne de manière rotative, à une même vitesse de rotation et en sens inverse de ladite couronne, lorsque ladite couronne et ladite couronne contrarotative sont entrainées en rotation par lesdits satellites.

Ici, dans cette variante d'un mode réalisation, afin de relier le réducteur au bâti fixe de la turbosoufflante, lesdits support paliers de soufflante et support paliers de soufflante contrarotative, sont chacun rattaché à une paroi annulaire conformée entourant le réducteur entre les deux soufflante contrarotatives, et comportant, au moins, 3 rayons profilés s'étendant radialement, entre les deux soufflantes, pour être rattachés au carénage de soufflante fixe.

De manière générale, un couple et une vitesse initiale provenant d'une turbomachine est transmis audit arbre d'entrée du réducteur qui entraine en rotation ladite roue solaire. Laquelle entraine en rotation, au moins, lesdits satellites internes ayant un axe de rotation, de préférence, sensiblement perpendiculaires à l'axe X, espacés d'un angle A autour de celui-ci, et agencés sur la denture de la roue solaire en se chevauchant diamétralement dessus-dessous. Ceux-ci entrainent en rotation, par l'intermédiaire d'un raccord de couplage élastiquement déformable, lesdits satellites externes qui entrainent en rotation, ladite couronne ainsi que ledit arbre de soufflante et ladite soufflante lui étant reliée, à une vitesse inférieure à la vitesse initiale mais avec un couple proportionnellement supérieur.

En outre, dans une variante d'un mode de réalisation, lesdits satellites externes entrainent également en rotation, ladite couronne contrarotative ainsi que ledit arbre de soufflante contrarotative et ladite soufflante contrarotative lui étant reliée, simultanément et à une même vitesse de rotation que ladite couronne mais en sens de rotation inverse.

La présente invention concerne en outre une turbosoufflante d'aéronef caractérisée en ce qu'elle comprend au moins un réducteur de vitesse tel que décrit ci-dessus.

L'invention sera mieux comprise, et d'autres caractéristiques, détails, buts, et avantages de celle-ci apparaîtront plus clairement au cours de la description explicative détaillée qui va suivre, de deux modes de réalisation et d'une variante de réalisation de l'invention donné à titre d'exemples purement illustratifs et non limitatifs, en référence aux dessins schématiques annexés.

### DESCRIPTION DES FIGURES

Sur ces dessins :
- [Fig.1] est une vue générale en demie coupe longitudinale d'un exemple d'architecture de turbosoufflante double flux incorporant un réducteur selon un premier mode de réalisation de l'invention
- [Fig.2] est une vue de détail en coupe longitudinale du réducteur selon la [Fig.1]
- [Fig.3] est une vue de détail transversale explicative en demie coupe C-C du réducteur selon l'invention
- [Fig.4] est une vue de détail transversale (suivant F) du réducteur selon la [Fig.1]
- [Fig.5] est une vue de détail transversale (suivant F) du réducteur selon un second mode de réalisation de l'invention
- [Fig.6] est une vue transversale d'un exemple de réalisation selon la [Fig.5]
- [Fig.7] est une vue avant en demie coupe longitudinale d'une variante selon un premier ou selon un second mode de réalisation

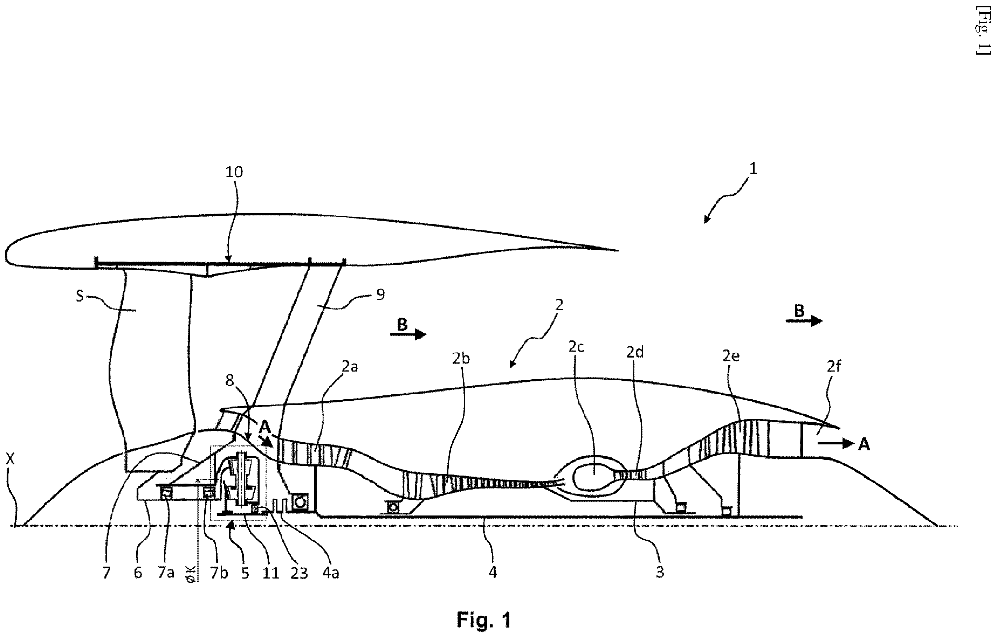

Sur la [Fig.1] est représentée une turbosoufflante (1) à double flux à réducteur, qui comprend classiquement d'amont en aval, dans le sens d'écoulement des flux (A,B), une soufflante S, un réducteur (5) et une turbomachine (2) comportant, un compresseur basse pression (2a), un compresseur haute pression (2b), une chambre de combustion (2c), une turbine haute pression (2d), une turbine basse pression (2e) et une tuyère d'échappement (2f). Le compresseur haute pression (2b) et la turbine haute pression (2d) sont reliés par un arbre haute pression (3) (HP). Le compresseur basse pression (2a) et la turbine basse pression (2e) sont reliés par un arbre basse pression (4) (BP). La soufflante S est entrainée en rotation par un arbre de soufflante (6) qui est relié à l'arbre BP (4) de la turbomachine (2) au moyen d'un réducteur (5) à arbres coaxiaux selon la présente invention.

Les axes des arbres HP (3), BP (4) et arbre de soufflante (6) sont sensiblement confondu avec l'axe de rotation X de la turbosoufflante (1).

Le réducteur (5) est positionné dans la partie avant de la turbosoufflante (1). Un support palier de soufflante (7) est rattaché à un carter (8) entourant le réducteur (5). Le carter (8), assimilable à un élément du stator de la turbomachine (2), est rattaché par l'intermédiaire d'une pluralité de rayons profilés (9) appelés « OGV », au carénage de soufflante (10) correspondant à un bâti fixe de la turbosoufflante (1).

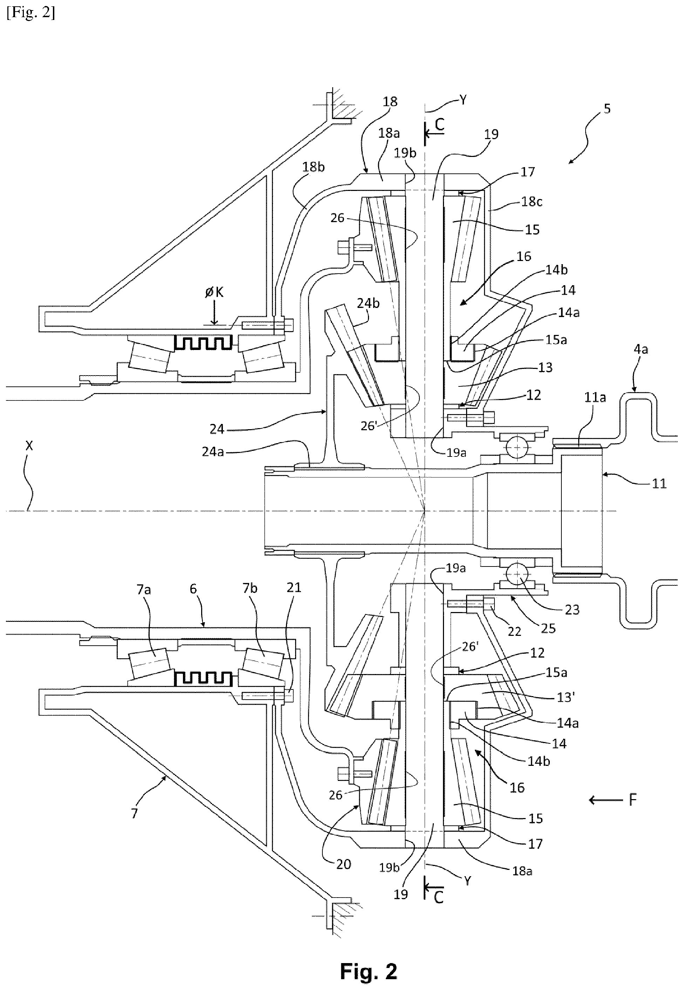

Dans un premier mode préféré de réalisation, comme illustré sur les figures 2, 3 et 4, qui montrent une partie du réducteur (5).

En aval du réducteur (5), le réducteur (5) est relié à un manchon flexible (4a) de l'arbre BP (4), par exemple par l'intermédiaire de cannelures (11a). Ainsi, l'arbre BP (4) entraine en rotation et transmet la puissance motrice de la turbomachine (2) à l'arbre d'entrée (11) du réducteur (5), monté rotatif sur le moyeu central (25) par l'intermédiaire, par exemple, d'un roulement à rotule (23), ou bien encore dans un autre exemple de réalisation non illustré, d'un couple de roulements à billes.

L'arbre d'entrée (11) entraine en rotation autour de l'axe X, une première roue dentée (24) ici appelée roue solaire, par exemple, par l'intermédiaire de cannelures (24a).

La roue solaire (24), située de préférence dans le présent exemple, mais non limitativement, du côté amont du réducteur (5), est engrenée avec une pluralité de premiers pignons denté (13;13'), ici appelés satellite interne, par exemple, 10 satellites internes. Lesdits satellites internes (13;13') faisant partie intégrante d'ensembles de pignons denté (16) ici appelés satellite. Chacun desdits satellites (16) étant composé d'un satellite interne (13;13'), d'un raccord de couplage (14) et d'un second pignon denté (15) ici appelé satellite externe.

La roue solaire (24) entraine en rotation lesdits satellites (16) comme suit ;

La roue solaire (24), roue dentée de type à axes concourants, préférentiellement mais non limitativement, à denture conique, d'axe de rotation confondu avec l'axe X, possède une denture (24b), par exemple en spirale avec une inclinaison des dents orientée, par exemple, à droite, ayant une largeur suffisante pour entrainer, sur deux diamètres moyens d'engrènement distinct D1 et D2, une pluralité, ici, de 10 (dix) satellites internes (13;13'), formant chacun un couple conique avec elle.

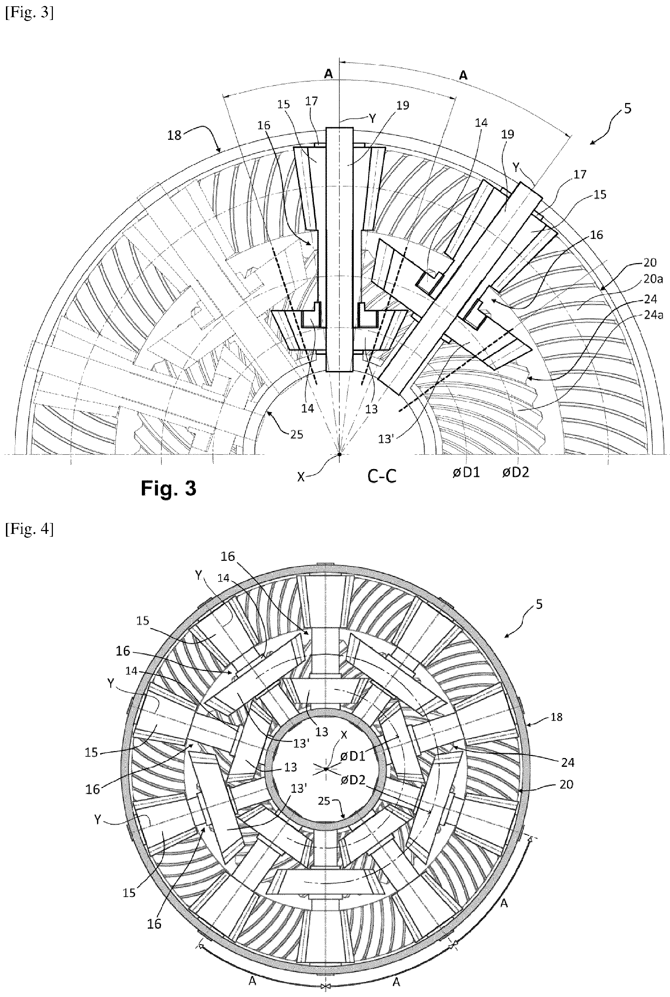

Lesdits satellites internes (13;13'), de la pluralité de satellites (16), dont ceux illustrés sur la [Fig.3] sont représentatifs, ont un axe de rotation Y, préférentiellement mais non limitativement, sensiblement perpendiculaire à l'axe X , sont espacés autour de celui-ci, sensiblement sur un même plan, d'un angle A égal à 36°, et sont agencés pour être en prise maillée avec la roue solaire (24) en étant radialement superposés, alternativement dessus-dessous, successivement les uns après les autres sur un premier diamètre moyen d'engrènement D1 puis sur un second diamètre moyen d'engrènement D2 plus grand, de la roue solaire (24), de manière que la roue solaire (24) coopère simultanément, dans cet exemple, avec 5 (cinq) sattelites internes (13) s'engrenant sur le premier diamètre moyen d'engrènement D1, et 5 (cinq) satellites internes (13') s'engrenant sur le second diamètre moyen d'engrènement D2.

Cet agencement desdits satellites internes (13;13'), sur la roue solaire (24), permet que l'encombrement diamétral de chacun d'entre eux n'est pas limité par l'encombrement diamétral des satellites internes (13;13') adjacents, de ce fait, les diamètres desdits satellites internes (13;13') se chevauchent pour être au plus grand, pour un angle A donné.

En outre, lesdits satellites internes (13) coopérants avec ledit diamètre moyen d'engrènement D1 ont un diamètre moyen d'engrènement plus petit que lesdits satellites internes (13') coopérants avec ledit diamètre moyen d'engrènement D2, de manière à ce que le rapport entre la roue solaire (24) et chacun desdits satellites internes (13;13'), est identique, et, dans le présent exemple, est aussi petit que 2,4 Autrement dit, un tour de roue solaire (24) autour de l'axe X, permet dans le même temps, une rotation de 2,4 tours de l'ensemble des 10 satellites internes (13;13'), chacun autour de leur axe de rotation Y respectif.

Chacun desdits satellites internes (13;13'), est couplé en rotation, par exemple par l'intermédiaire de cannelures, à une première extrémité extérieure (14a) d'un raccord de couplage (14) de forme annulaire, la seconde extrémité intérieure (14b) du raccord de couplage (14) étant couplée en rotation, par exemple par l'intermédiaire de cannelures, à un satellite externe (15). Ledit satellite interne (13;13'), étant en contact axial sur la face (15a) dudit satellite externe (15), ledit raccord de couplage (14), situé entre le satellite interne (13;13'), et le satellite externe (15), raccorde ceux-ci en rotation et pivote coaxialement avec eux autour d'un axe de rotation Y.

En outre, le raccord de couplage (14) pouvant se déformer élastiquement, un décalage angulaire se produit sous la charge nominale, entre le satellite interne (13;13') et le satellite externe (15) permettant de répartir sensiblement également le couple total transmis par le réducteur (5) sur chacun desdits satellites (16) de ladite pluralité de satellites.

Chacun desdits satellites internes (13;13'), entrainés en rotation par la roue solaire (24), entraine le raccord de couplage (14) lui étant relié. Celui-ci entraine en rotation le satellite externe (15) lui étant relié. Les 10 satellites (16) de l'exemple, sont donc tous entrainés simultanément par la roue solaire (24), à une même vitesse de rotation.

La pluralité de satellites (16) sont maintenus dans leurs positions respectives par une structure « porte-satellite » composée du moyeu central (25) sur lequel sont rattachés, autant de tourillons (19) qu'il y a de satellites (16) soit, dans cet exemple, 10 tourillons (19), disposés de manière que chacun desdits satellites (16) pivote coaxialement autour d'un tourillon (19).

Les tourillons (19) sont rattachés à leurs extrémité proximale (19a) au moyeu central (25) et s'étendent radialement jusqu'a une paroi annulaire centrale (18a) d'un boitier carter (18) du réducteur (5), et sur laquelle les extrémités distales (19b) des tourillons (19) sont rattachées afin que la structure « porte-satellite » soit maintenue par le boitier carter (18).

Une butée interne (12), en appui sur le moyeu central (25), et une butée externe (17), en appui sur la paroi annulaire central (18a) du boitier carter (18), assure le positionnement axial de chacun desdits satellites (16).

Les satellites internes (13;13') et externes (15) pivotent sur les tourillons (19) préférentiellement, pour des applications à vitesses élevées et forte charge comme l'application visée par la présente demande, mais non limitativement, par l'intermédiaire de palier fluide (26;26') hydrodynamique ou hydrostatique, ou dans un autre exemple de réalisation non illustré, par des roulement à rouleaux. Des coussinets lisses pourraient aussi être utilisés pour d'autres applications moins exigeantes.

En amont du réducteur (5), c'est-à-dire d'un même côté que la soufflante S, une seconde roue dentée (20) ici appelée couronne, de type à axes concourant, préférentiellement mais non limitativement, à denture conique, d'axe de rotation confondu avec l'axe X, forme un couple conique et coopère avec chacun desdits satellites externes (15) avec lesquels elle est en prise maillée.

La couronne (20) possède une denture (20a), par exemple en spirale avec une inclinaison des dents orientée dans un même sens que la roue solaire (24), c'est-à-dire dans cet exemple, à droite.

La roue solaire (24) et la couronne (20) ont une denture ayant un même sens d'inclinaison, afin que sous la charge nominale, chacun des couples formés par un satellite interne (13;13') et un satellite externe (15) d'un même satellite (16), de la pluralité de satellites (16), se poussent l'un sur l'autre dans la direction de leur axe de rotation Y, et neutralise mutuellement une partie de leur poussée axiale respective, limitant ainsi la poussée axiale résultante sur une butée, par exemple, sur ladite butée externe (17).

La pluralité desdits satellites externes (15) possède un même diamètre moyen d'engrènement, dimensionné au plus petit afin d'obtenir un rapport entre la couronne (20) et chacun desdits satellites externes (15) aussi grand que possible, par exemple 7,2 dans le présent exemple.

Autrement dit, la couronne (20) à pivotée d'un tour autour de l'axe X, lorsque dans le même temps, l'ensemble des satellites externes (15) ont pivotés de 7,2 tours, chacun sur leur axe de rotation Y respectifs.

Enfin, en sortie du réducteur (5), la couronne (20) entrainée en rotation par la pluralité de satellites externes (15), ici dans cet exemple, dans un même sens de rotation que la roue solaire (24), entraine également la soufflante S par l'intermédiaire de l'arbre de soufflante (6) rattachant la soufflante S à la couronne (20).

Le rapport de réduction du réducteur (5) étant égal, au rapport entre la couronne (20) et un desdits satellite externe (15), divisé par, le rapport entre la roue solaire (24) et un desdits satellite interne (13;13');

Le réducteur (5) du présent exemple comportant 10 satellites (16) équirépartis sur un plan sensiblement perpendiculaire à l'axe X, à un rapport de réduction égal à 7,2 / 2,4 = 3:1

Autrement dit, une soufflante S entrainée par un réducteur (5) de l'exemple, tourne autour de l'axe X, dans un même sens de rotation que l'arbre BP (4), à une vitesse de rotation 3 fois plus lente et avec un couple 3 fois plus grand, que la vitesse de rotation et le couple transmis par l'arbre BP (4) de la turbomachine (2), et permet une densité de puissance optimisée avec une pluralité de 10 satellites (16).

En amont du réducteur (5), la couronne (20), l'arbre de soufflante (6), et la soufflante S, solidaires entre eux, pivotent sur un support paliers de soufflante (7) fixe, par l'intermédiaire de, au moins, deux roulements de soufflante (7a;7b) préférentiellement pour l'application visée, mais non limitativement, de type à rouleaux coniques disposés tête bèche selon un montage « en O ». En fonction des charges exercées sur la soufflante S et la couronne (20), d'autres combinaisons de roulements non illustrées, pourraient être utilisées comme, par exemple, un couple de roulement à billes ou bien encore un roulement à billes associé à un roulement à rouleaux.

De ce même coté du réducteur (5), afin de permettre le rattachement du boitier carter (18) du réducteur (5) au bâti fixe de la turbosoufflante (1), une paroi annulaire conformée (18b) du boitier carter (18), connectée à la paroi annulaire centrale (18a), entoure la pluralité de satellites (16) et les roues dentées (24;20) et s'étend radialement vers le centre du réducteur (5), depuis la paroi annulaire centrale (18a) jusqu'au diamètre extérieur du roulement de soufflante (7b) afin de permettre son rattachement avec le support paliers de soufflante (7), au niveau d'un diamètre K compris entre le diamètre extérieur du roulement de soufflante (7b) et le diamètre extérieur du boitier carter (18).

Le rattachement entre le boitier carter (18) et le support paliers de soufflante (7) étant réalisé par l'intermédiaire, par exemple, d'une pluralité de vis (21) réparties sur le diamètre K.

En aval du réducteur (5), une paroi annulaire conformée (18c) du boitier carter (18), connectée à la paroi annulaire centrale (18a) entoure la pluralité de satellite (16) et s'étend radialement vers le centre du réducteur (5), depuis la paroi annulaire centrale (18a) du boitier carter (18) jusqu'au moyeu central (25), afin d'être rattachée avec celui-ci par l'intermédiaire, par exemple, d'une pluralité de vis (22). Ce qui permet à la fois, d'augmenter la rigidité de ladite structure « porte-satellite », et d'isoler les éléments interne du réducteur (5) dans une enceinte à huile.

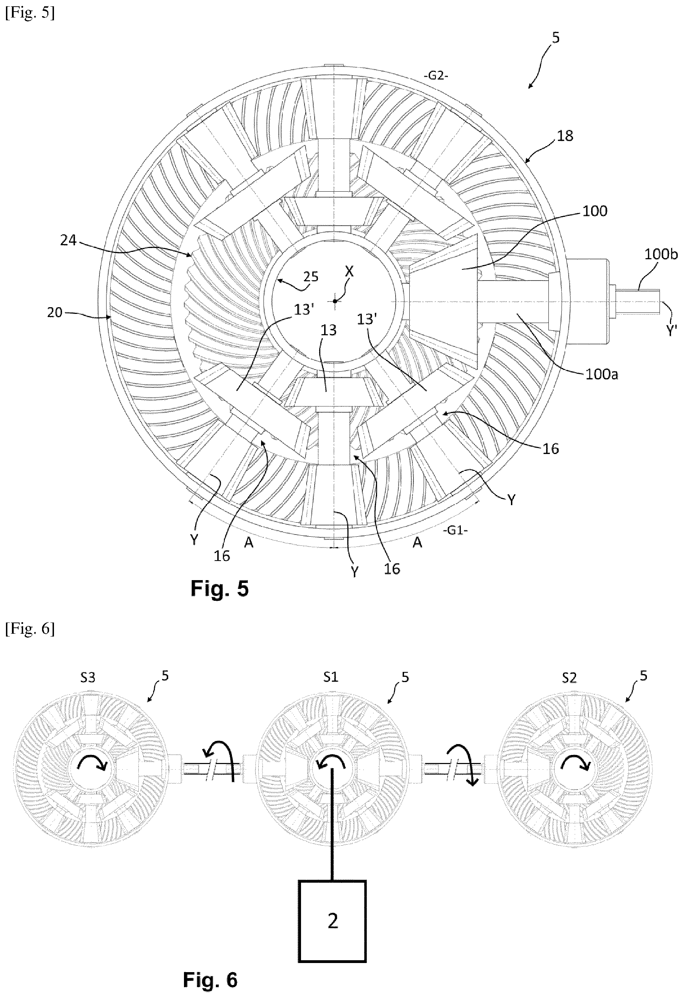

En se référant maintenant à la [Fig.5] on voit un second mode de réalisation de l'invention. Ce mode de réalisation est en tout point identique à celui précédemment décrit, à la différence qu'ici, la roue solaire (24) entraine 6 (six) satellites (16) répartis autour de l'axe X, par exemple, en deux groupes G1,G2 diamétralement opposés de 3 (trois) satellites (16) chacun. Les 3 satellites (16) de chaque groupe G1,G2 étant successivement espacés d'un angle A égal à 36°

Dans cet exemple le rapport entre la roue solaire (24) et chacun desdits satellites internes (13;13') de la pluralité de satellites (16) est égal à 2,4 .

Ce mode de réalisation de l'invention permet, ici, d'obtenir à la fois, un rapport de réduction du réducteur (5) égal à 3:1 et une densité de puissance optimisée avec une pluralité de 6 satellites (16), et de disposer, entre les deux groupes G1,G2 de satellites (16), d'une accessibilité aux dentures (20a;24a) des roues dentées (20;24), permettant à au moins un pignons denté (100), comportant au moins une partie cylindrique (100a), d'axe de rotation Y' préférentiellement mais non limitativement, sensiblement perpendiculaire à l'axe X, d'être en prise maillée et de coopérer avec la roue solaire (24). La partie cylindrique (100a) étant montée rotative sur le boitier carter (18) et traversant radialement celui-ci afin de permettre une prise-de-force radiale extérieure au réducteur (5) par l'intermédiaire, par exemple, de cannelures (100b).

Le présent dispositif pouvant être utilisé simultanément comme réducteur et renvoi d'angle, pour réaliser, par exemple, un moteur d'aéronef à multiple modules de soufflantes entrainées par une unique turbomachine, comme, par exemple, un moteur d'aéronef à triple modules de soufflante S1,S2,S3 entrainés par une unique turbomachine (2), dont l'illustration de la [Fig.6] schématise chacun des réducteur (5) des 3 modules de soufflante S1,S2,S3 et les arbres de liaison reliant les prise-de-force des réducteurs (5).

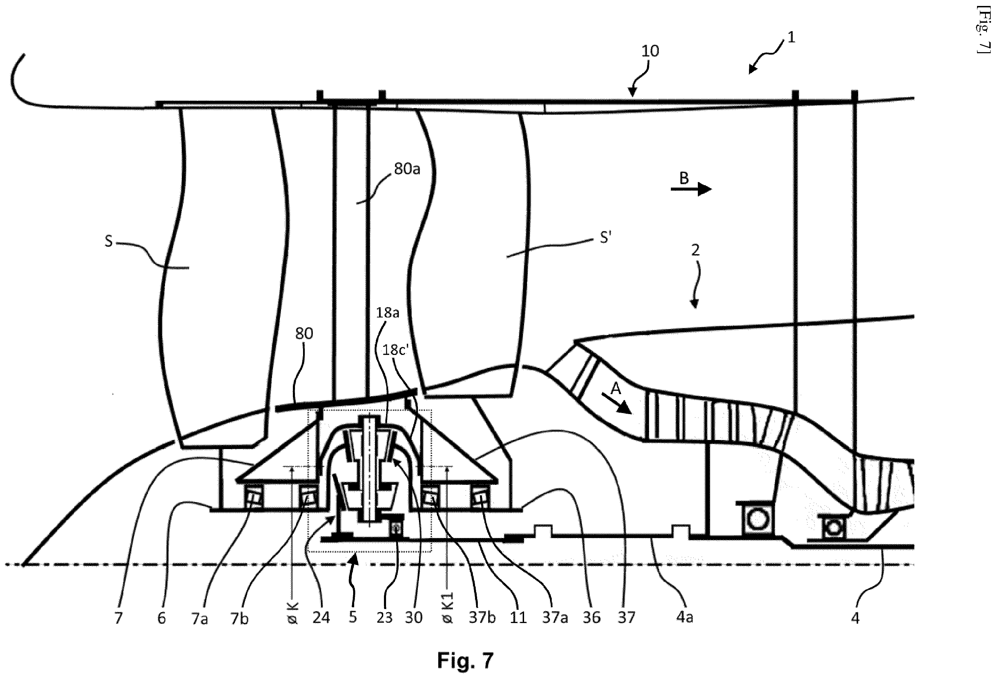

En variante d'un premier mode ou d'un second mode de réalisation, comme illustrée sur la [Fig.7], la partie aval du boitier carter (18), est modifiée pour permettre l'ajout d'une soufflante contrarotative S'.

Pour la clarté du présent exposé, les termes contrarotatif(-ive) sont remplacés par l'abréviation «CR» ; soufflante contrarotative devient donc soufflanteCR.

En aval du réducteur (5), c'est-à-dire d'un côté opposé à la couronne (20), une troisième roue dentée (30) ici appelée couronne contrarotative ou couronneCR , de type à axes concourants, préférentiellement mais non limitativement, à denture conique, d'axe de rotation confondu avec l'axe X, de dimension et de dentures d'engrenage identiques à ladite couronne (20), forme un couple conique et coopère avec chacun desdits satellites externes (15) avec lesquels elle est en prise maillée.

La couronneCR (30) et la couronne (20) sont simultanément entrainées en rotation par lesdits satellites externes (15), la couronneCR (30) pivotant dans un sens de rotation inverse à la couronne (20).

La couronneCR (30), solidaire d'un arbre de soufflanteCR (36) rattaché à une soufflanteCR S' , entraine ainsi cette dernière, à la même vitesse de rotation que la soufflante S, et en sens inverse à celle-ci.

En aval du réducteur (5), la couronneCR (30), l'arbre de soufflanteCR (36) et la soufflanteCR S', tous solidaires entre eux, pivotent sur un support paliers de soufflanteCR (37), par l'intermédiaire de, au moins, deux roulements de soufflanteCR (37a;37b) préférentiellement pour l'application visée, mais non limitativement, de type à rouleaux coniques disposés tête bèche selon un montage « en O ». En fonction des charges exercées sur la soufflanteCR S' et la couronneCR (30), d'autres combinaisons de roulements non illustrées, pourraient être utilisées comme, par exemple, un couple de roulement à billes ou bien encore un roulement à billes associé à un roulement à rouleaux.

De ce même coté du réducteur (5), une paroi annulaire conformée (18c' ) du boitier carter (18), connectée à la paroi annulaire centrale (18a), entoure la pluralité de satellites (16) et la couronneCR (30) et s'étend radialement vers le centre du réducteur (5), depuis la paroi annulaire centrale (18a) du boitier carter (18) jusqu'au diamètre extérieur du roulement de soufflanteCR (37b) afin de permettre son rattachement avec le support paliers de soufflanteCR (37), au niveau d'un diamètre K1 compris entre le diamètre extérieur du roulement de soufflanteCR (37b) et le diamètre extérieur du boitier carter (18).

Le rattachement entre le boitier carter (18) et le support paliers de soufflanteCR (37) étant réalisé par l'intermédiaire, par exemple, d'une pluralité de vis réparties sur le diamètre K1.

Ici, dans la variante d'un mode de réalisation, afin de relier le boitier carter (18) du réducteur (5) au bâti fixe de la turbomachine (1), lesdits support paliers de soufflante (7) et support paliers de soufflanteCR (37) sont chacun rattaché à une paroi annulaire conformée (80), s'étendant entre la soufflante S et la soufflanteCR S', formant une enceinte entourant le réducteur (5). Ladite paroi annulaire conformée (80) comportant, au moins, 3 rayons profilés (80a) équirepartis autour de l'axe X, s'étendant radialement, entre les deux soufflantes S et S', de la paroi annulaire conformée (80) jusqu'au carénage de soufflante (10) fixe, pour y être rattachés.

Dans les différents modes et variante de réalisation de l'invention précédemment décrits, des engrenages de type à axes concourants à denture conique ont été préférentiellement choisis, toutefois dans des modes de réalisation alternatifs non illustré, des engrenages de type à axes concourants à denture frontale ou « face gear » (en langue anglaise), pourraient remplacer les engrenages à denture conique et être utilisés de la même manière dans la présente invention.

## Revendications

1. Réducteur de vitesse (5) à arbres coaxiaux à engrenages à axes concourants pour moteur à turbine à gaz d'aéronef, en particulier pour turbosoufflante à fort taux de dilution d'axe de rotation longitudinal X comportant:
- un boitier carter (18);
- un moyeu central (25);
- une roue solaire (24), coaxiale et solidaire d'un arbre d'entrée (11) configuré pour être relié à un arbre basse pression (4) d'une turbomachine (2), et montée rotative sur le moyeu central (25);
- une couronne (20), radialement plus grande que ladite roue solaire (24) et espacée de celle-ci, coaxiale et solidaire d'un arbre de soufflante (6) configuré pour être relié à une soufflante S montée rotative sur un support palier de soufflante (7); et
- une pluralité de satellites (16) d'axes de rotation Y transversal à l'axe X, répartis autour de l'axe X en étant espacés entre eux d'un angle A inférieur à 90° (degré) et comportant chacun, au moins, un satellite interne (13;13') en prise maillée et coopérant avec ladite roue solaire (24), un satellite externe (15) en prise maillée et coopérant avec ladite couronne (20), un raccord de couplage (14) couplant en rotation ledit satellite interne (13;13') et ledit satellite externe (15); chacun desdits satellites (16) pivotant coaxialement autour d'un tourillon (19) rattaché à ses extrémités (19a;19b) au moyeu central (25) et au boitier carter (18);
**caractérisé en ce que** lesdits satellites internes (13;13') de ladite pluralité de satellites (16), sont en prise maillée avec ladite roue solaire (24), en étant agencés de manière à se superposer radialement, successivement et alternativement dessus-dessous, en s'engrenant sur un premier diamètre moyen d'engrènement D1 puis sur un second diamètre moyen d'engrènement D2 plus grand, de ladite roue solaire (24), afin que lesdits satellites internes (13;13') coopèrent avec ladite roue solaire (24) en se chevauchant diamétralement

2. Réducteur selon la revendication 1, **caractérisé en ce que** lesdits satellites internes (13) de la pluralité de satellites (16), coopérants avec ledit diamètre moyen d'engrènement D1 de la roue solaire (24) ont un diamètre moyen d'engrènement plus petit que lesdits satellites internes (13') de la pluralité de satellites (16), coopérants avec ledit diamètre moyen d'engrènement D2 de la roue solaire (24), de manière à ce que le rapport obtenu entre la roue solaire (24) et chacun desdits satellites internes (13;13') est identique

3. Réducteur selon les revendications précédentes, **caractérisé en ce que** le rapport du diamètre moyen d'engrènement D1 ou D2 de la roue solaire (24) divisé par le diamètre moyen d'engrènement coopérant de chacun desdits satellites internes (13;13') de la pluralité de satellites (16) est inférieur au rapport 2 / A (2 divisé par A, avec l'angle A exprimé en radians)

4. Réducteur selon la revendication 3, **caractérisé en ce que** pour une pluralité de 10 (dix) desdits satellites (16) repartis avec un angle A égal à 36°(degré) autour de l'axe X sur un plan sensiblement perpendiculaire à celui-ci, le rapport entre la roue solaire (24) et chacun desdits satellites internes (13;13') est inférieur ou égal à 2,4 et le rapport de réduction du réducteur (5) est supérieur ou égal à 3:1

5. Réducteur selon l'une des revendications précédentes, **caractérisé en ce que** ladite pluralité de satellites (16) tournent sur eux-mêmes, simultanément et à une même vitesse de rotation, lorsqu'ils sont entrainés par l'une ou par l'autre de ladite roue solaire (24) ou de ladite couronne (20)

6. Réducteur selon l'une des revendications précédentes, **caractérisé en ce que**, en variante ou en combinaison, lesdits satellites internes et externes (13;13';15) et lesdites couronne et roue solaire (20;24) sont des engrenages de type à axes concourants à denture conique, à dents droites ou inclinées

7. Réducteur selon l'une des revendications 1 à 5, **caractérisé en ce que**, en variante ou en combinaison, lesdits satellites internes et externes (13;13';15) et lesdites couronne et roue solaire (20;24) sont des engrenages de type à axes concourants à denture frontale, à dents droites ou inclinées

8. Réducteur selon l'une des revendications 6 ou 7, **caractérisé en ce que** lesdits satellites internes (13 ; 13') et lesdits satellites externes (15) ont des dents inclinées dans un même sens

9. Réducteur selon l'une des revendications précédentes, **caractérisé en ce que** lesdits satellites externes (15) et lesdits satellites internes (13;13') de la pluralité de satellites (16), pivotent sur leur tourillon (19) respectif par l'intermédiaire de palier fluide (26;26') ou de roulement à rouleaux.

10. Réducteur selon l'une des revendications précédentes, **caractérisé en ce que** le raccord de couplage (14), de forme annulaire comportant une extrémité intérieure (14b) et une extrémité extérieure (14a) sensiblement coaxiales l'une de l'autre, peut se déformer élastiquement de manière qu'un déplacement angulaire se produit entre ladite extrémité intérieure (14b) et ladite extrémité extérieure (14a), lorsque qu'un moment ou un couple est appliqué entre lesdites extrémités (14a;14b)

11. Réducteur selon l'une des revendications précédentes, **caractérisé en ce que**, ledit boitier carter (18) est configuré pour être rattaché au support paliers de soufflante (7), au niveau d'un diamètre K compris entre le diamètre extérieur du roulement de soufflante (7b) et le diamètre extérieur du boitier carter (18)

12. Réducteur selon l'une des revendications précédentes, **caractérisé en ce que**, en combinaison ou en variante, au moins un pignon denté (100), d'axe de rotation Y' transversal à l'axe X, comportant au moins une partie cylindrique (100a) traversant radialement le boitier carter (18), est en prise maillée et coopère avec la roue solaire (24) simultanément avec lesdits satellite interne (13;13')

13. Réducteur selon l'une des revendications précédentes, **caractérisé en ce que**, en combinaison ou en variante, une couronne contrarotative (30), de dimension et de denture d'engrenage identiques à ladite couronne (20), coaxiale et solidaire d'un arbre de soufflante contrarotative (36) configuré pour être relié à une soufflante contrarotative S' d'axe de rotation X et montée rotative sur un support paliers de soufflante contrarotative (37), est en prise maillée et coopère avec la pluralité desdits satellites externes (15) d'un côté opposé à ladite couronne (20) par rapport à la pluralité de satellites (16)

14. Réducteur selon la revendication 13, **caractérisé en ce que** ladite couronne contrarotative (30) tourne de manière rotative à une même vitesse de rotation et en sens inverse de ladite couronne (20), lorsque ladite couronne (20) et ladite couronne contrarotative (30) sont entrainées en rotation par lesdits satellites (16)

15. Turbosoufflante d'aéronef **caractérisée en ce qu'**elle comprend au moins un réducteur de vitesse selon l'une des revendications précédentes

## Patentansprüche

1. Untersetzungsgetriebe (5) mit koaxialen Wellen und Zahnrädern mit sich schneidenden Achsen für ein Flugzeug-Gasturbinentriebwerk, insbesondere für ein Mantelstromtriebwerk mit hohem Nebenstromverhältnis und einer Längsdrehachse X, umfassend:
ein Getriebegehäuse (18);
eine zentrale Nabe (25);
ein Sonnenrad (24), das koaxial und fest mit einer Eingangswelle (11) verbunden ist, die dazu eingerichtet ist, mit einer Niederdruckwelle (4) einer Gasturbomaschine (2) verbunden zu werden, und das drehbar auf der zentralen Nabe (25) gelagert ist;
ein Hohlrad (20), das radial größer als das Sonnenrad (24) ist und von diesem beabstandet, koaxial und fest mit einer Fanwelle (6) verbunden ist, die dazu eingerichtet ist, mit einem Fan (S) verbunden zu werden, welcher drehbar auf einem Fanlagerträger (7) montiert ist; und
eine Mehrzahl von Planetenrädern (16) mit Rotationsachsen Y, die quer zur Achse X verlaufen, um die Achse X herum mit einem Winkel A von weniger als 90° (Grad) voneinander beabstandet angeordnet sind, wobei jedes dieser Planetenräder (16) mindestens aufweist:
- ein inneres Planetenrad (13;13'), das mit dem Sonnenrad (24) im Eingriff steht und mit diesem zusammenwirkt,
- ein äußeres Planetenrad (15), das mit dem Hohlrad (20) im Eingriff steht und mit diesem zusammenwirkt,
- eine Kupplungsverbindung (14), die das innere Planetenrad (13;13') und das äußere Planetenrad (15) drehfest miteinander koppelt;
wobei jedes der Planetenräder (16) koaxial um einen Zapfen (19) drehbar ist, der an seinen Enden (19a;19b) mit der zentralen Nabe (25) und dem Getriebegehäuse (18) verbunden ist;
**dadurch gekennzeichnet, dass** die inneren Planetenräder (13;13') der Mehrzahl von Planetenrädern (16) mit dem Sonnenrad (24) im Eingriff stehen, wobei sie so angeordnet sind, dass sie sich radial überlagern, nacheinander und
wechselseitig oben und unten, wobei sie sich zunächst auf einem ersten mittleren Eingriffsdurchmesser D1 und dann auf einem zweiten, größeren mittleren Eingriffsdurchmesser D2 des Sonnenrades (24) abstützen, so dass die inneren Planetenräder (13;13') mit dem Sonnenrad (24) im Durchmesser überlappend zusammenwirken.

2. Untersetzungsgetriebe nach Anspruch 1, **dadurch gekennzeichnet, dass** die inneren Planetenräder (13) der Mehrzahl von Planetenrädern (16), die mit dem mittleren Eingriffsdurchmesser D1 des Sonnenrades (24) zusammenwirken, einen kleineren mittleren Eingriffsdurchmesser aufweisen als die inneren Planetenräder (13') der Mehrzahl von Planetenrädern (16), die mit dem mittleren Eingriffsdurchmesser D2 des Sonnenrades (24) zusammenwirken, so dass das Übersetzungsverhältnis zwischen dem Sonnenrad (24) und jedem der inneren Planetenräder (13;13') identisch ist.

3. Untersetzungsgetriebe nach einem der vorhergehenden Ansprüche, **dadurch gekennzeichnet, dass** das Verhältnis des mittleren Eingriffsdurchmessers D1 oder D2 des Sonnenrades (24) zu dem mit ihm zusammenwirkenden mittleren Eingriffsdurchmesser jedes der inneren Planetenräder (13;13') der Mehrzahl von Planetenrädern (16) kleiner ist als das Verhältnis 2 / A (2 geteilt durch A, wobei der Winkel A in Bogenmaß angegeben ist).

4. Untersetzungsgetriebe nach Anspruch 3, **dadurch gekennzeichnet, dass** bei einer Mehrzahl von zehn (10) der genannten Planetenräder (16), die mit einem Winkel A von 36° (Grad) um die Achse X in einer Ebene angeordnet sind, die im Wesentlichen senkrecht zu dieser verläuft, das Übersetzungsverhältnis zwischen dem Sonnenrad (24) und jedem der inneren Planetenräder (13;13') kleiner oder gleich 2,4 ist und das Untersetzungsverhältnis des Untersetzungsgetriebes (5) größer oder gleich 3:1 ist.

5. Untersetzungsgetriebe nach einem der vorhergehenden Ansprüche, **dadurch gekennzeichnet, dass** die genannte Mehrzahl von Planetenrädern (16) sich gleichzeitig und mit gleicher Drehgeschwindigkeit um ihre eigene Achse dreht, wenn sie entweder von dem genannten Sonnenrad (24) oder von dem genannten Hohlrad (20) angetrieben werden.

6. Untersetzungsgetriebe nach einem der vorhergehenden Ansprüche, **dadurch gekennzeichnet, dass**, alternativ oder in Kombination, die genannten inneren und äußeren Planetenräder (13; 13'; 15) sowie das genannte Hohlrad und das Sonnenrad (20; 24) Zahnräder mit sich schneidenden Achsen und Kegelverzahnung mit geraden oder schrägen Zähnen sind.

7. Untersetzungsgetriebe nach einem der Ansprüche 1 bis 5, **dadurch gekennzeichnet, dass**, alternativ oder in Kombination, die genannten inneren und äußeren Planetenräder (13; 13'; 15) sowie das genannte Hohlrad und das Sonnenrad (20; 24) Zahnräder mit sich schneidenden Achsen und Stirnverzahnung mit geraden oder schrägen Zähnen sind.

8. Untersetzungsgetriebe nach einem der Ansprüche 6 oder 7, **dadurch gekennzeichnet, dass** die genannten inneren Planetenräder (13; 13') und die genannten äußeren Planetenräder (15) Zähne mit gleicher Schrägrichtung aufweisen.

9. Untersetzungsgetriebe nach einem der vorhergehenden Ansprüche, **dadurch gekennzeichnet, dass** die genannten äußeren Planetenräder (15) und die genannten inneren Planetenräder (13; 13') der Mehrzahl von Planetenrädern (16) jeweils über ein Fluidlager (26; 26') oder ein Wälzlager auf ihrem jeweiligen Zapfen (19) drehbar gelagert sind.

10. Untersetzungsgetriebe nach einem der vorhergehenden Ansprüche, **dadurch gekennzeichnet, dass** die Kupplungsverbindung (14) eine ringförmige Gestalt mit einem inneren Ende (14b) und einem äußeren Ende (14a) aufweist, die im Wesentlichen koaxial zueinander angeordnet sind, und dass sie elastisch verformbar ist, so dass ein Winkelversatz zwischen dem inneren Ende (14b) und dem äußeren Ende (14a) entsteht, wenn ein Moment oder ein Drehmoment zwischen den genannten Enden (14a; 14b) aufgebracht wird.

11. Untersetzungsgetriebe nach einem der vorhergehenden Ansprüche, **dadurch gekennzeichnet, dass** das genannte Getriebegehäuse (18) so ausgestaltet ist, dass es an dem Fanlagerträger (7) auf einem Durchmesser K befestigt werden kann, der zwischen dem Außendurchmesser des Fanlagers (7b) und dem Außendurchmesser des Getriebegehäuses (18) liegt.

12. Untersetzungsgetriebe nach einem der vorhergehenden Ansprüche, **dadurch gekennzeichnet, dass**, alternativ oder in Kombination, mindestens ein Zahnrad (100) mit einer Rotationsachse Y', die quer zur Achse X verläuft, vorgesehen ist, wobei das Zahnrad (100) mindestens einen zylindrischen Abschnitt (100a) aufweist, der das Getriebegehäuse (18) radial durchquert, und dass dieses Zahnrad (100) gleichzeitig mit den genannten inneren Planetenrädern (13; 13') mit dem Sonnenrad (24) im Eingriff steht und mit diesem zusammenwirkt.

13. Untersetzungsgetriebe nach einem der vorhergehenden Ansprüche, **dadurch gekennzeichnet, dass**, alternativ oder in Kombination, ein gegenläufiges Hohlrad (30), das in Abmessung und Verzahnung identisch mit dem genannten Hohlrad (20) ist, koaxial ist und fest mit einer gegenläufigen Fanwelle (36) verbunden ist, die dazu eingerichtet ist, mit einem gegenläufigen Fan (S') mit Drehachse X verbunden zu werden, welcher drehbar auf einem Lagerträger (37) für den gegenläufigen Fan montiert ist, mit der Mehrzahl der genannten äußeren Planetenräder (15) auf der dem genannten Hohlrad (20) gegenüberliegenden Seite der Mehrzahl von Planetenrädern (16) im Eingriff steht und mit diesen zusammenwirkt.

14. Untersetzungsgetriebe nach Anspruch 13, **dadurch gekennzeichnet, dass** das genannte gegenläufige Hohlrad (30) mit derselben Drehgeschwindigkeit, jedoch in entgegengesetzter Drehrichtung wie das genannte Hohlrad (20) rotiert, wenn das genannte Hohlrad (20) und das gegenläufige Hohlrad (30) durch die genannten Planetenräder (16) in Rotation versetzt werden.

15. Flugzeugturbofan, **dadurch gekennzeichnet, dass** er mindestens ein Untersetzungsgetriebe gemäß einem der vorhergehenden Ansprüche umfasst.

## Claims

1. A reduction gearbox (5) with coaxial shafts and gears with intersecting axes for a gas turbine engine of an aircraft, in particular for a high bypass ratio turbofan with longitudinal axis of rotation X, comprising:
a casing housing (18);
a central hub (25);
a sun gear (24), coaxial and secured to an input shaft (11) configured to be connected to a low-pressure shaft (4) of a turbomachine (2), and rotatably mounted on the central hub (25);
a ring gear (20), radially larger than said sun gear (24) and spaced therefrom, coaxial and secured to a fan shaft (6) configured to be connected to a fan (S) rotatably mounted on a fan bearing support (7); and
a plurality of planet gears (16) with axes of rotation Y transverse to axis X,
distributed around axis X and spaced from each other by an angle A of less than 90° (degrees), each comprising at least:
- an inner planet gear (13;13') in meshing engagement and cooperating with said sun gear (24),
- an outer planet gear (15) in meshing engagement and cooperating with said ring gear (20),
- a coupling connection (14) rotationally coupling said inner planet gear (13;13') and said outer planet gear (15);
each of said planet gears (16) pivoting coaxially about a trunnion (19) connected at its ends (19a;19b) to the central hub (25) and to the casing housing (18);
**characterized in that** said inner planet gears (13;13') of said plurality of planet gears (16) are in meshing engagement with said sun gear (24), being arranged so as to be radially superposed, successively and alternately over and under,
meshing on a first mean meshing diameter D1 and then on a second, greater mean meshing diameter D2, of said sun gear (24), so that said inner planet gears (13;13') cooperate with said sun gear (24) in a diametrically overlapping manner.

2. Reduction gearbox according to claim 1, **characterized in that** said inner planet gears (13) of the plurality of planet gears (16), cooperating with said mean meshing diameter D1 of the sun gear (24), have a smaller mean meshing diameter than said inner planet gears (13') of the plurality of planet gears (16), cooperating with said mean meshing diameter D2 of the sun gear (24), such that the gear ratio obtained between the sun gear (24) and each of said inner planet gears (13;13') is identical.

3. Reduction gearbox according to the preceding claims, **characterized in that** the ratio of the mean meshing diameter D1 or D2 of the sun gear (24) to the cooperating mean meshing diameter of each of said inner planet gears (13;13') of the plurality of planet gears (16) is less than the ratio 2 / A (2 divided by A, with angle A expressed in radians).

4. Reduction gearbox according to claim 3, **characterized in that** for a plurality of ten (10) of said planet gears (16) distributed with an angle A equal to 36° (degrees) around axis X in a plane substantially perpendicular thereto, the ratio between the sun gear (24) and each of said inner planet gears (13;13') is less than or equal to 2.4, and the reduction ratio of the gearbox (5) is greater than or equal to 3:1

5. Reduction gearbox according to one of the preceding claims, **characterized in that** said plurality of planet gears (16) rotate about themselves, simultaneously and at the same rotational speed, when driven by either said sun gear (24) or said ring gear (20).

6. Reduction gearbox according to one of the preceding claims, **characterized in that**, as an alternative or in combination, said inner and outer planet gears (13; 13'; 15) and said ring gear and sun gear (20; 24) are gears of the converging-axis type with bevel teeth, either straight or helical.

7. Reduction gearbox according to one of claims 1 to 5, **characterized in that**, as an alternative or in combination, said inner and outer planet gears (13; 13'; 15) and said ring gear and sun gear (20; 24) are gears of the converging-axis type with front teeth or «face gear», either straight or helical.

8. Reduction gearbox according to one of claims 6 or 7, **characterized in that** said inner planet gears (13; 13') and said outer planet gears (15) have teeth inclined in the same direction.

9. Reduction gearbox according to one of the preceding claims, **characterized in that** said outer planet gears (15) and said inner planet gears (13; 13') of the plurality of planet gears (16) pivot on their respective trunnion (19) via a fluid bearing (26; 26') or a roller bearing.

10. Reduction gearbox according to one of the preceding claims, **characterized in that** the coupling connection (14), having an annular shape and comprising an inner end (14b) and an outer end (14a) substantially coaxial with one another, is elastically deformable such that an angular displacement occurs between said inner end (14b) and said outer end (14a) when a torque or moment is applied between said ends (14a; 14b).

11. Reduction gearbox according to one of the preceding claims, **characterized in that** said casing housing (18) is configured to be attached to the fan bearing support (7), at a diameter K located between the outer diameter of the fan bearing (7b) and the outer diameter of the casing housing (18).

12. Reduction gearbox according to one of the preceding claims, **characterized in that**, in combination or as an alternative, at least one toothed pinion (100), with an axis of rotation Y' transverse to axis X, comprising at least one cylindrical portion (100a) radially crossing the casing housing (18), is in meshing engagement and cooperates with the sun gear (24) simultaneously with said inner planet gears (13; 13').

13. Reduction gearbox according to one of the preceding claims, **characterized in that**, in combination or as an alternative, a counter-rotating ring gear (30), having the same size and gear teeth as said ring gear (20), coaxial and secured to a counter-rotating fan shaft (36) configured to be connected to a counter-rotating fan (S') with axis of rotation X and rotatably mounted on a counter-rotating fan bearing support (37), is in meshing engagement and cooperates with the plurality of said outer planet gears (15) on a side opposite to said ring gear (20) with respect to the plurality of planet gears (16).

14. Reduction gearbox according to claim 13, **characterized in that** said counter-rotating ring gear (30) rotates at the same rotational speed and in the opposite direction to said ring gear (20), when said ring gear (20) and said counter-rotating ring gear (30) are driven in rotation by said planet gears (16).

15. Aircraft turbofan, **characterized in that** it comprises at least one reduction gearbox according to one of the preceding claim
